# EUROPEAN PATENT SPECIFICATION

(11) **EP 2 826 298 B1**
(45) Date of publication and mention of the grant of the patent: **16.05.2018**
(21) Application number: 13760234.8
(22) Date of filing: 27.02.2013
(51) Int. Cl.: H04W 72/12, H04W 4/06, H04W 52/02

(54) **RF CHAIN USAGE IN A DUAL NETWORK ARCHITECTURE**
VERWENDUNG EINER RF-KETTE IN EINER DUALEN NETZWERKARCHITEKTUR
UTILISATION DE CHAÎNE RF DANS UNE ARCHITECTURE DE RÉSEAU DOUBLE

(30) Priority: 16.03.2012 US 201261612188 P; 28.09.2012 US 201213631341
(43) Date of publication of application: 21.01.2015
(73) Proprietor: Intel Corporation, Santa Clara, CA 95054 (US)
(72) Inventor: HEO, Youn Hyoung, Seoul 150-705 (KR); ZHANG, Yujian, Beijing 100081 (CN); FONG, Mo-Han, Sunnyvale, CA 94087 (US)
(74) Representative: Goddar, Heinz J.
(86) International application number: PCT/US2013/027921
(87) International publication number: WO 2013/138065

(56) References cited:
- US-A1- 2011 080 867
- US-A1- 2011 134 831
- US-A1- 2011 205 984
- SADAYUKI ABETA: 'Toward LTE Commercial Launch and Future Plan for LTE Enhancements (LTE-Advanced)' IEEE 2010, XP031848276
- QIANG NI ET AL.: 'Investigation of Bandwidth Request Mechanisms under Point- to-MultipointMode of WiMAX Networks' IEEE COMMUNICATIONS MAGAZINE vol. 44, no. 5, May 2007, pages 132 - 138, XP011181068

## Description

### TECHNICAL FIELD

The present disclosure relates generally to wireless communications. More particularly, the present disclosure relates to carrier aggregation support in wireless communication systems.

### BACKGROUND

Dual wireless technology architecture (also referred to as dual-standby architecture) comprises user equipment (UE) using a first wireless technology for voice communications (e.g., phone calls) and a second wireless technology for data communications (e.g., web browsing). As an example, the first wireless technology can be 2nd Generation (2G) or 3rd Generation (3G) cellular technology, and the second wireless technology can be a 3rd Generation Partnership Project (3GPP) long term evolution (LTE) - Advanced technology. In 3GPP LTE Release-10 system, carrier aggregation (CA) is supported. CA. is used to extend communication up to 100 megahertz (MHz) in Release 10. Such large bandwidth communication is achieved by the simultaneous aggregation of more than one Release 8/9 component carrier having bandwidths of 1.4, 3, 5, 10, 15, and up to 20 MHz, hence the term carrier aggregation., in which each carrier within the aggregated set of carriers is referred to as a component carrier. Under Release 10, up to five component carriers may be aggregated together to achieve the maximum bandwidth of 100 MHz.

If CA is supported in dual-standby architecture, it may be possible for a UE to share a radio frequen.cy (RF) chain between the 2G/3G network and LTE network if the two networks' respective frequency bands are close to each other. If a RF chain is to be shared., the evolved node B (eNodeB or eNB) should be notified of whether it will be used for 2G/3G or LTE service. Currently the eNodeB is not provided this information.

In this regard, US 2011/134831 A1 teaches a method for enabling interoperability between different types of wireless communication systems operating with different types of air interfaces to provide at least downlink radio resource aggregation for a user equipment. The method includes providing a common set of upper radio layer functionalities for one or more radio bearers assigned to the user equipment, the one or more radio bearers being associated with a first wireless communication system and a second wireless communication system. The method further includes performing wireless communications with the user equipment via one or more of the radio bearers via the first and second wireless communication systems.
Moreover, US 2011/205984 A1 teaches a communications apparatus with multiple radio access technologies (RATs). A first RAT module transceives radio frequency (RF) signals in a first cellular network through the antenna. A second RAT module transceives RF signals in a second cellular network through the antenna. An arbiter receives a first and a second request from the first and second RAT module requesting permission to use the antenna for a first and a second channel activity, obtains a priority configuration for the first channel activity versus the second channel activity when the second channel activity collides with the first channel activity, and responds to one of the first and second RAT modules with an acknowledgement message and to the other of the first and second RAT modules with a rejection message based on the obtained priority configuration.

### BRIEF DESCRIPTION OF THE DRAWINGS

FIG. 1 illustrates an example (portion) of a dual radio access technology (RAT) network according to some embodiments.
FIG. 2 illustrates an example block diagram showi.ng details of each of eNodeBs, BSs, and UEs according to some embodiments.
FIG. 3 illustrates an example block diagram showing additional components included in one or more of the UEs according to some embodiments.
FIGs. 4A-4B illustrates example respective flow diagrams showing use of radio resource control (RRC) signaling to facilitate information sharing between a given UE and its associated eNodeB pertaining to which network the RF chain of the given UE is /will be supporting according to some embodiments.
FIGs. 5A.-5E illustrate example timing diagrams corresponding to FIGs. 4A-4B according to some embodiments.
FIG. 6 illustrates an example flow diagram for using Activation/Deactivation MAC control elemen.t (CE) signaling according to some embodiments.
FIG. 7 illustrates an example flow diagram for assignment of PCell and SCells and/or CCs for the PCell and SCells for the UE 122 that can be controlled by the network to avoid frequency co-existence issues from occurring beforehand.

### DETAILED DESCRIPTION

The invention concerns a method for using radio frequency chain sharing information as defined in claim 1. Embodiments representing particular realisations of the invention are defined in the dependent claims.

The following description is presented to enable any person skilled in the art to create and use a computer system configuration and related method and article of manufacture to notify an eNodeB of which network a RF chain switchable between at least two disparate networks (e.g., LTE and 3G, LTE and 2G, etc.) will be supporting in connection with a service event (e.g., start of a voice call) are described herein. The switchable RF chain is included in a UE capable of dual-network operation. The dual network architecture supports CA. The UE provides notification to its associated eNodeB when the frequency band to be used for the service event (e.g., 2G/3G voice call) is the same as or close to the frequency band used for the other network service (e.g., LTE service). In some embodiments RRC signaling is used to provide the information about RF sharing to the eNodeB. In other embodiments Activation/Deactivation MAC CE signaling is triggered by RF sharing information provided by the UE to the eNodeB. In still other embodiments PCell and SCells and/or CCs for the PCell and SCells are judiciously assigned to the UE so as to minimize frequency co-existence issues.

Various modifications to the embodiments will be readily apparent to those skilled in the art, and the disclosure herein may be applied to other embodiments and applications without departing from the scope of the invention as defined in the appended claims. Moreover, in the following description, numerous details are set forth for the purpose of explanation. However, one of ordinary skill in the art will realize that embodiments of the invention may be practiced without the use of these specific details. In other instances, well-known structures and processes are not shown in block diagram form in order not to obscure the description of the embodiments of the invention with unnecessary detail. Thus, the present disclosure is not intended to be limited to the embodiments shown, but is to be accorded the widest scope consistent with the principles and features disclosed herein.

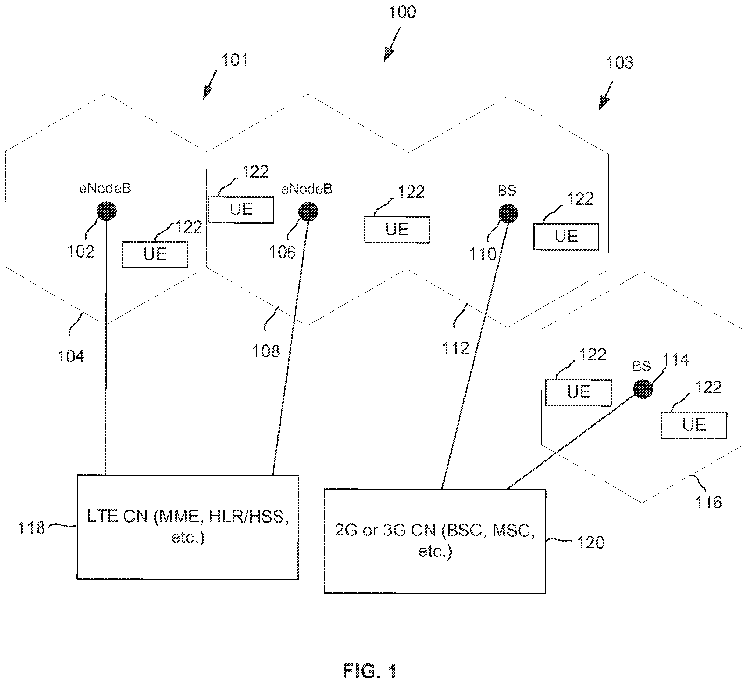

FIG. 1 illustrates an example (portion) of a dual radio access technology (RAT) network 100 according to some embodiments. Network 100 represents an example dual-standby or dual-network architecture. In one embodiment, the network 100 comprises a 3rd Generation Partnership Project (3GPP) long term evolution (LTE) -Advanced technology network 101 and a 2nd Generation (2G) or 3rd Generation (3G) RAT network 103. The 2G RAT network 103 comprises a network based on the Global System for Mobile (GSM) or Code Division Multiple Access (CDMA) standard. The 3G RAT network 103 comprises a network based on the Universal Mobile Telecommunications System (UMTS) or Evolved High Speed Packet Access (HSPA+) standard. The LTE RAT network 101 operates in either time division duplexing (TDD) mode or frequency division duplexing (FDD) mode. The LTE network 101 includes an evolved node B (eNodeB or eNB) 102, an eNodeB 106, and a core network 118. The 2G/3G network 103 includes a base station (BS) 110, a BS 114, and a core network 120.

The eNodeB 102 (also referred to as a base station) serves a certain geographic area that includes at least a cell 104. A plurality of user equipment (UEs) 122 associated with the cell 104 communicates with the eNodeB 102 on one or more specific frequencies, the eNodeB 102 providing control and radio air interface functionalities for cell 104. The eNodeB 106 (also referred to as a base station) is similar to eNodeB 102 except it serves a different cell from that of eNodeB 102. The eNodeB 106 serves a certain geographic area that includes at least a cell 108. A plurality of UEs 122 associated with the cell 108 communicates with the eNodeB 106 on one or more specific frequencies, the eNodeB 106 providing control and radio air interface functionalities for cell 108.

Each of the eNodeBs 102, 106 communicates with the core network 118. Core network 118 includes, but is not limited to, a mobility management entity (MME), a home location registrar (HLR)/home subscriber server (HSS), serving gateway (SGW), and other LTE network components providing network functionalities not provided by an eNodeB.

The BS 110 serves a certain geographic area that includes at least a cell 112. A plurality of UEs 122 associated with the cell 112 communicates with the BS 110 on one or more specific frequencies, the BS 110 providing control and radio air interface functionalities for cell 112. The BS 114 is similar to BS 110 except it serves a different cell from that of BS 110. The BS 114 serves a certain geographic area that includes at least a cell 116. A plurality of UEs 122 associated with the cell 116 communicates with the BS 114 on one or more specific frequencies, the BS 114 providing control and radio air interface functionalities for cell 116.

Each of the BSs 110, 114 communicates with the core network 120. Core network 120 includes, but is not limited to, base station controllers (BSCs), a mobile switching center (MSC), and other 2G/3G network components providing network functionalities not provided by a BS.

The cells 104, 108, 112, 116 may or may not be immediately co-located next to each other. As another example, the respective coverage areas of the cells 104, 108, 112, 116 may overlap with each other. As still another example, the respective coverage areas of the cells 104, 108, 112, 116 may be distinct or isolated from each other. It is understood that the network 100 includes more than two eNodeBs and more than two BSs, each of such eNodeBs or BSs serving a cell.

The UEs 122 (also referred to as mobile devices) comprises a variety of devices that communicate within the network 100 including, but not limited to, cellular telephones, smart phones, tablets, laptops, desktops, personal computers, servers, personal digital assistants (PDAs), web appliances, set-top box (STB), a network router, switch or bridge, and the like. The UEs 122 comprise dual RAT UEs capable of switching operation between the LTE network and 2G/3G network. In one embodiment, each of the UEs 122 may access the 2G/3G network via BS 110 or 114 for voice (phone calls) and access the LTE network via eNodeB 102 or 106 for data (web browsing, emails).

When operating in LTE mode, the UEs 122 located in respective cells 104, 108 transmits data to its respective eNodeB 102, 106 (uplink transmission) and receives data from its respective eNodeB 102, 106 (downlink transmission) using radio frames comprising Orthogonal Frequency-Division Multiple Access (OFDMA) frames. For Release-10 or later LTE networks 101, carrier aggregation (CA) is supported, in which up to five frequency bands corresponding to five component carriers (CCs) can be aggregated to expand the overall bandwidth of the network (e.g., up to a bandwidth of 100 MHz). For each of the UEs 122 at a given point in time, a CC is defined as a given UE 122's primary cell (PCell). If more than one CC is configured for the given UE 122, the additional CCs are referred to as secondary cells (SCells). For instance, cell 104 can be designated as the PCell for a given UE 122 while cell 108 is designated as the SCell for the same given UE 122. In Release-10 or later LTE CA, a plurality of serving cells are served by the same eNodeB. For example, eNodeB 102 may serve cell 104 and one or more other cells not shown in FIG. 1.

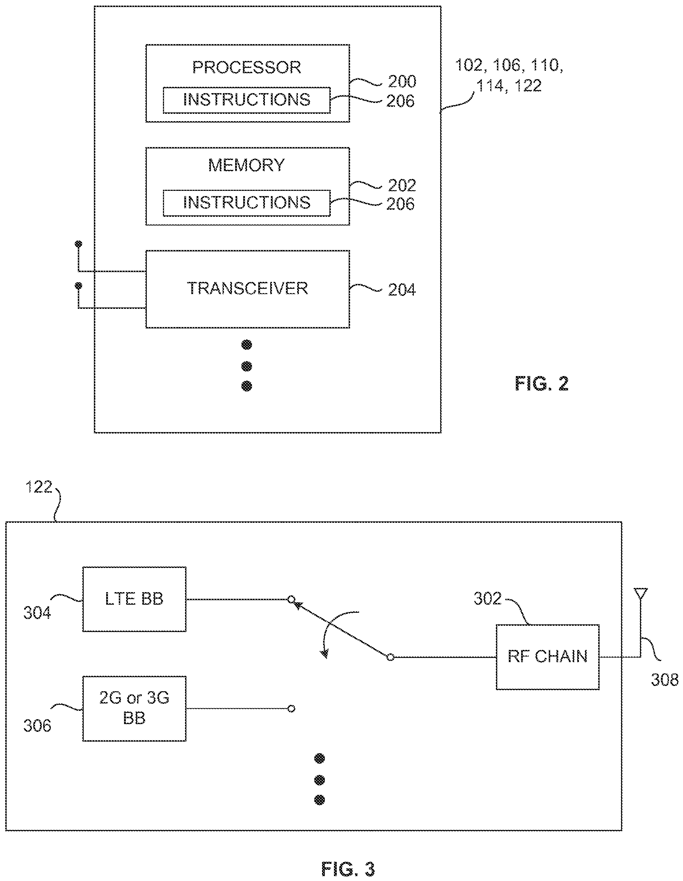

FIG. 2 illustrates an example block diagram showing details of each of eNodeBs 102, 106, BSs 110, 114, and UEs 122 according to some embodiments. Each of the eNodeBs 102, 106, BSs 110, 114, and UEs 122 includes a processor 200, a memory 202, a transceiver 204, instructions 206, and other components (not shown). The eNodeBs 102, 106, BSs 110, 114, and UEs 122 can be similar to each other in hardware, firmware, software, configurations, and/or operating parameters.

The processor 200 comprises one or more central processing units (CPUs), graphics processing units (GPUs), or both. The processor 200 provides processing and control functionalities for the eNodeBs 102, 106, BSs 110, 114, and UEs 122. Memory 202 comprises one or more transient and static memory units configured to store instructions and data for the eNodeBs 102, 106, BSs 110, 114, and UEs 122. The transceiver 204 comprises one or more transceivers including a multiple-input and multiple-output (MIMO) antenna to support MIMO communications. The transceiver 204 receives uplink transmissions and transmits downlink transmissions, among other things, from and to the UEs respectively.

The instructions 206 comprises one or more sets of instructions or software executed on a computing device (or machine) to cause such computing device (or machine) to perform any of the methodologies discussed herein. The instructions 206 (also referred to as computer- or machine-executable instructions) may reside, completely or at least partially, within the processor 200 and/or the memory 202 during execution thereof by the eNodeBs 102, 106, BSs 110, 114, and UEs 122. The processor 200 and memory 202 also comprise machine-readable media.

FIG. 3 illustrates an example block diagram showing additional components included in one or more of the UEs 122 according to some embodiments. In one embodiment, a given UE 122 includes at least one RF chain 302. When CA is supported (e.g., in Release 10 or later LTE network 101) in the network 100, the given UE 122 is implemented with multiple RF chains. The given UE 122 can be configured to share the RF chain 302 between LTE service and 2G/3G service if the respective frequency bands are close to each other. As shown in FIG. 3, the RF chain 302 is selectively connectable or switchable to a LTE baseband (BB) 304 or a 2G/3G BB 306. Each of the LTE BB 304 and 2G/3G BB 306 comprises a BB integrated circuit (IC) chip. Each of the LTE BB 304 and 2G/3G BB 306 can be provided on separate IC chips, or together on a single IC chip. The RF chain 302 includes, but is not limited to, a digital-to-analog (D/A)/analog-to-digital (D/A) converter, decoder/encoder, modulator/demodulator, filter, power amplifier (PA), and local oscillator (LO).

When the RF chain 302 is switched to the LTE BB 304, the given UE 122 operates in the LTE network and an antenna 308 transmits or receives wireless signals configured according to the LTE standard. When the RF chain 302 is switched to the 2G/3G BB 306, the given UE 122 operates in the 2G/3G network and the antenna transmits or receives wireless signals configured according to the 2G/3G standard. If the RF chain 302 is being used to support a LTE service, for example, then the RF chain 302 cannot simultaneously be used to support a 2G/3G service. Thus, the eNodeB associated with the given UE 122 is informed of which network the RF chain 302 is supporting.

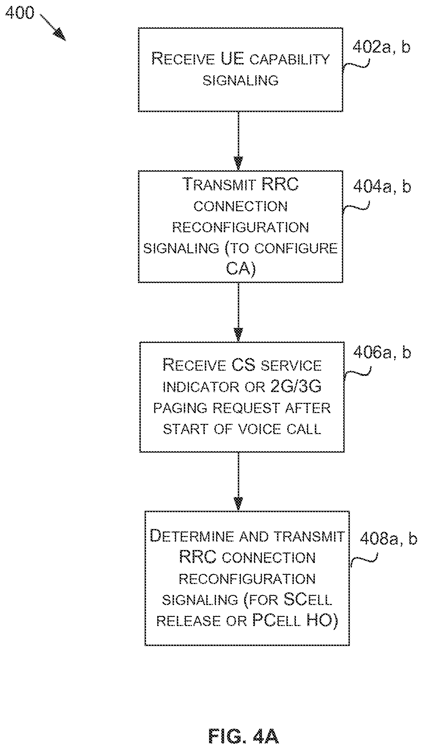

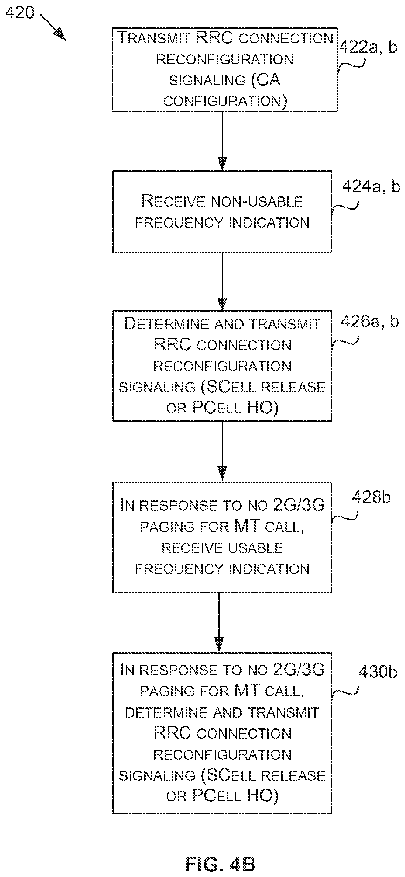

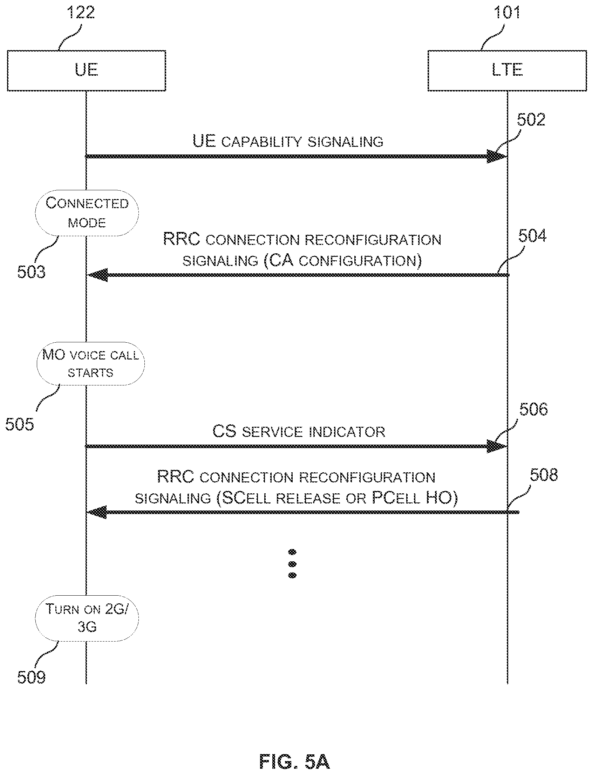

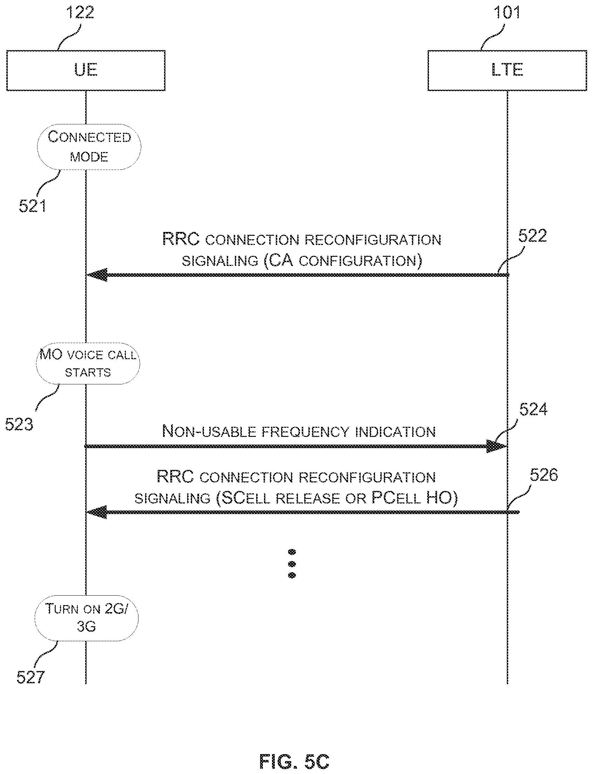

FIGs. 4A-4B illustrates example flow diagrams 400 and 420, respectively, showing use of radio resource control (RRC) signaling to facilitate information sharing between a given UE 122 and an eNodeB (e.g., eNodeB 102 or 106) pertaining to which network the RF chain 302 of the given UE 122 is /will be supporting according to some embodiments. FIGs. 5A-5B illustrate example timing diagrams corresponding to FIG. 4A according to some embodiments. FIGs. 5C-5E illustrate example timing diagrams corresponding to FIG. 4B according to some embodiments.

FIGs. 4A and 5A correspond to the given UE 122 originating a voice call (also referred to as a mobile originating (MO) call) and correspondingly, configuring its RF chain 302 to connect to the 2G/3G BB 306 to operate on the 2G/3G network. At a block 402a of FIG. 4A, a given eNodeB (e.g., eNodeB 102 or 106) associated with the given UE 122 receives UE capability signaling from the given UE 122 (communication 502 in FIG. 5A). The UE capability signaling comprises RF sharing information (also referred to as RF chain sharing information) informing the given eNodeB whether RF chain 302 is shared between LTE and 2G/3G for each supported frequency band or frequency band combination (each frequency band of each supported frequency bandwidth provided by CA). After the UE capability signaling is received by the given eNodeB, the given UE 122 goes into connected mode (connected mode 503 in FIG. 5A) if there is a packet switched call in LTE. Connected mode occurs upon the given UE 122 completing the initial RRC connection setup procedure with the given eNodeB.

Next at a block 404a, the given eNodeB transmits to the given UE 122, RRC connection reconfiguration signaling comprising CA configuration if there is no voice call on-going in 2G/3G (communication 504 in FIG. 5A). When the given UE 122 starts a MO call 505 after block 404a, the given UE 122 transmits a circuit switched (CS) service indicator to the given eNodeB (communication 506 in FIG. 5A). The CS service indicator is received by the given eNodeB, at a block 406a, the CS service indicator informing the given eNodeB of the start of a MO call by the given UE 122.

At a block 408a, in response to receiving the CS service indicator, the given eNodeB determines whether to send a message for the given UE 122 to release a SCell or to handover to a new PCell. In CA, there are a number of serving cells, one cell for each CC included in the CA. The cell corresponding to a given CC operates at a specific frequency band from the other CCs within the CA. The coverage area of a cell for a CC can be different from a cell for another CC. The cells for one or more CCs can be served by the same eNodeB. When more than one CC is associated with the given UE 122 (in other words, more than one cell is associated with the given UE 122), the cell corresponding to one of these CCs is designated as the PCell for the given UE 122. The remaining cells corresponding to the remaining associated CCs are referred to as SCells for the given UE 122. Only the PCell is responsible for mobility management such as providing non-access-stratum (NAS) mobility information or security keys. SCells can be added or removed, as required, for the given UE 122 with RRC connection reconfiguration, while the PCell association changes by performing handover to a new/different PCell.

The given eNodeB transmits a RRC connection reconfiguration message/signaling to the given UE 122 to release a particular SCell associated with the given UE 122, if the particular SCell corresponds to the frequency band that is shared with 2G/3G service (communication 508 in FIG. 5A). The eNodeB commands the given UE 122 to release the particular SCell so that there is no inadvertent use of the frequency band, which will be used for the MO call via 2G/3G service, for some other purpose. Releasing a cell refers to temporarily placing a hold on maintaining a connection with and/or use of the cell. If there is no common frequency band between the SCells and 2G/3G service and the current/source PCell corresponds to the frequency band shared for 2G/3G service, then the given eNodeB transmits a RRC connection reconfiguration message/signaling to the given UE 122 to perform inter-frequency handover (HO) of the PCell to another carrier frequency (communication 508 in FIG. 5A). In general the RRC connection reconfiguration message with mobility control information is providing instructions to release the source/current PCell and handover to another cell in the different carrier frequency.

Once the given UE 122 has taken action in accordance with the RRC connection reconfiguration message in block 408a, the given UE 122 turns on 2G/3G service 509 (FIG. 5A) and camps on a 2G/3G cell for the duration of the MO call. While camping on a 2G/3G cell, the given UE 122 maintains connection with LTE cells (the associated PCell and SCell(s) except for the cell instructed to be released in block 408a).

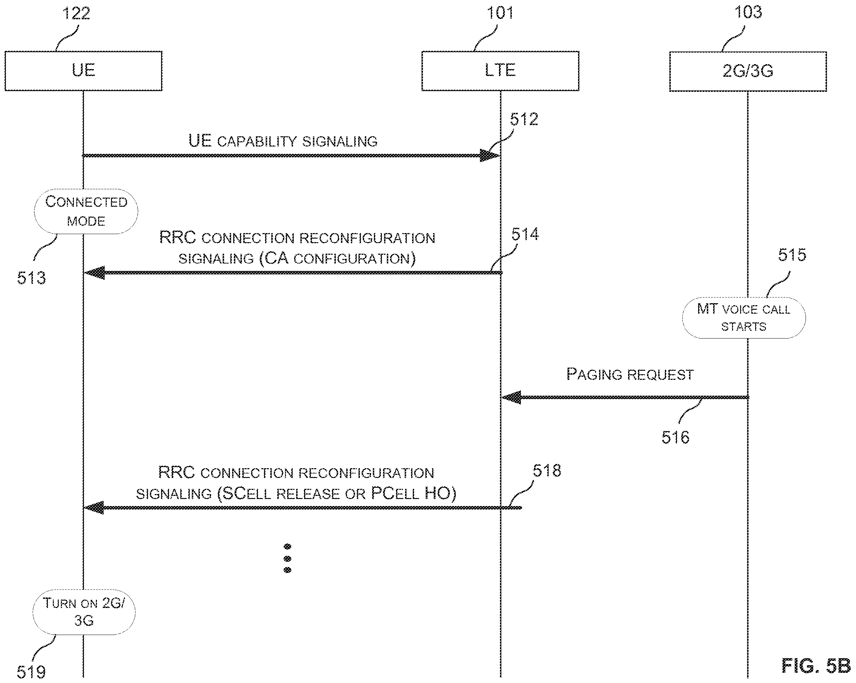

FIGs. 4A and 5B correspond to the given UE 122 receiving a voice call (also referred to as a mobile terminating (MT) call) and correspondingly, configuring its RF chain 302 to connect to the 2G/3G BB 306 to operate on the 2G/3G network. FIG. 5B is similar to FIG. 5A with the exception of communication 516 (instead of communication 506) and involvement of the 2G/3G network 103.

At a block 402b of FIG. 4A, a given eNodeB (e.g., eNodeB 102 or 106) associated with the given UE 122 receives UE capability signaling from the given UE 122 (communication 512 in FIG. 5B). The UE capability signaling comprises RF sharing information informing the given eNodeB whether RF chain 302 is shared between LTE and 2G/3G for each supported frequency band or frequency band combination (each frequency band of each supported frequency bandwidth provided by CA). After the UE capability signaling is received by the given eNodeB, the given UE 122 goes into connected mode (connected mode 513 in FIG. 5B) if there is a packet switched call in LTE. Connected mode occurs upon the given UE 122 completing the initial RRC connection setup procedure with the given eNodeB.

Next at a block 404b, the given eNodeB transmits to the given UE 122, RRC connection reconfiguration signaling comprising CA configuration if there is no voice call on-going in 2G/3G (communication 514 in FIG. 5B). When a MT call starts 515 after block 404b, the 2G/3G core network 120, e.g., the mobile switching centre server (MSC) included in the 2G/3G core network 120, sends a paging request to the LTE core network 120, e.g., the MME included in the LTE core network 120 (communication 516 in FIG. 5B). The paging request includes information such as, but not limited to, UE identity and Paging cause. The MME, in turn, informs the given eNodeB that there is a MT call started using 2G/3G for the given UE 122. Thus, the given eNodeB (indirectly) receives the paging request from the 2G/3G network 103 in response to start of a MT call 515 on the 2G/3G network 103 (block 406b).

At a block 408b, in response to receiving the paging request, the given eNodeB determines whether to send a message for the given UE 122 to release a SCell or to handover to a new PCell. The given eNodeB transmits a RRC connection reconfiguration message/signaling to the given UE 122 to release a particular SCell associated with the given UE 122, if the particular SCell corresponds to the frequency band that is shared with 2G/3G service (communication 518 in FIG. 5B). The eNodeB commands the given UE 122 to release the particular SCell so that there is no inadvertent use of the frequency band, which will be used for the MT call using 2G/3G service, for some other purpose. If there is no common frequency band between the SCells and 2G/3G service and the current/source PCell corresponds to the frequency band shared for 2G/3G service, then the given eNodeB transmits a RRC connection reconfiguration message/signaling to the given UE 122 to perform inter-frequency handover (HO) of the PCell to another carrier frequency (communication 518 in FIG. 5B). In general the RRC connection reconfiguration message with mobility control information is providing instructions to release the source/current PCell and handover to another cell in the different carrier frequency.

Once the given UE 122 has taken action in accordance with the RRC connection reconfiguration message in block 408b, the given UE 122 turns on 2G/3G service 519 (FIG. 5B) and camps on a 2G/3G cell to receive paging information corresponding to the MT call. While camping on a 2G/3G cell, the given UE 122 maintains connection with LTE cells (the associated PCell and SCell(s) except for the cell instructed to be released in block 408b).

In some embodiments, at the block 408b, in order to reduce delay in starting the voice call using the 2G/3G network 103 due to page reception, the given eNodeB can send the 2G/3G paging to the given UE 122 (rather than a given BS of the 2G/3G network 103, such as BS 110 or 114, sending the 2G/3G paging to the given UE 122). Such 2G/3G paging information (also referred to as 2G/3G voice call indication) can be included in the RRC connection reconfiguration message pertaining to SCell release or PCell HO (communication 518). Then the 2G/3G network 103 can start random access for the MT call without receiving a return page in the 2G/3G cell.

FIG. 4B illustrates an example flow diagram 420 showing an alternative use of RRC signaling to facilitate information sharing between a given UE 122 and an eNodeB (e.g., eNodeB 102 or 106) pertaining to which network the RF chain 302 of the given UE 122 is /will be supporting according to some embodiments. FIGs. 5C-5E illustrate example timing diagrams corresponding to FIG. 4B according to some embodiments.

FIGs. 4B and 5C correspond to the given UE 122 originating a voice call (MO call) and the RF chain 302 included in the UE 122 connecting to the 2G/3G BB 306 to operate on the 2G/3G network. Although not shown, initial RRC connection setup signaling occurred between the given UE 122 and its associated eNodeB (e.g., eNodeB 102 or 106) in order for the given UE 122 to be in connected mode 521 (see FIG. 5C).

Next at a block 422a of FIG. 4B, the given eNodeB transmits a RRC connection reconfiguration signaling comprising CA configuration to the given UE 122 (communication 522 at FIG. 5C). This RRC connection reconfiguration signaling is provided if there is no voice call on-going in 2G/3G. Once the given UE 122 initiates a MO call 523, the UE 122 sends a non-usable frequency indication to the given eNodeB (communication 524 in FIG. 5C). The non-usable frequency indication is received by the given eNodeB (block 424a). The non-usable frequency indication comprises identification of one or more frequency bands or frequency band combinations (each frequency band of each supported frequency bandwidth provided by CA) that cannot be used for LTE temporarily even though it is a supported frequency band or frequency band combination. Each of the supported frequency band or frequency band combination is the same as those concerning the UE capability signaling discussed above with respect to FIGs. 4A, 5A, and 5B. The identified one or more frequency bands or frequency band combinations cannot be simultaneously used with the current LTE serving cells due to RF sharing (e.g., will be used for the 2G/3G voice call) or other limitation of the dual-standby architecture.

In response to receiving the non-usable frequency indication, the given eNodeB determines and transmits RRC connection reconfiguration signaling instructing the UE 122 to release a particular SCell or to perform inter-frequency HO of PCell to another carrier frequency (block 426a) (communication 526). Additional details regarding SCell release or PCell HO is discussed above with respect to blocks 408a and b. Once the given UE 122 has taken action in accordance with the RRC connection reconfiguration message in block 426a, the given UE 122 turns on 2G/3G 527 and camps on a 2G/3G cell for the duration of the MO call. While camping on a 2G/3G cell, the given UE 122 maintains connection with LTE cells (the associated PCell and SCell(s) except for the cell instructed to be released in block 426a).

In contrast to the UE capability signaling scheme discussed above with respect to FIG. 4A, the eNodeB does not necessarily know that the given UE 122 shares the RF chain 302 between LTE and 2G/3G when non-usable frequency indication is used instead. The eNodeB is merely notified when a certain frequency band or frequency band combination among the supported frequency band(s)/frequency band combination(s) is being reserved and therefore not available for use by the LTE serving cells.

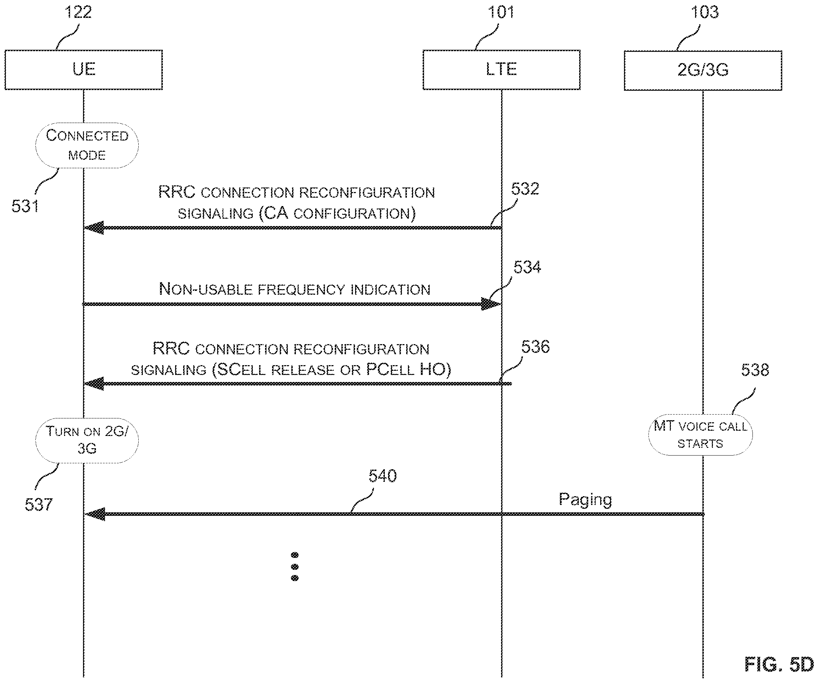

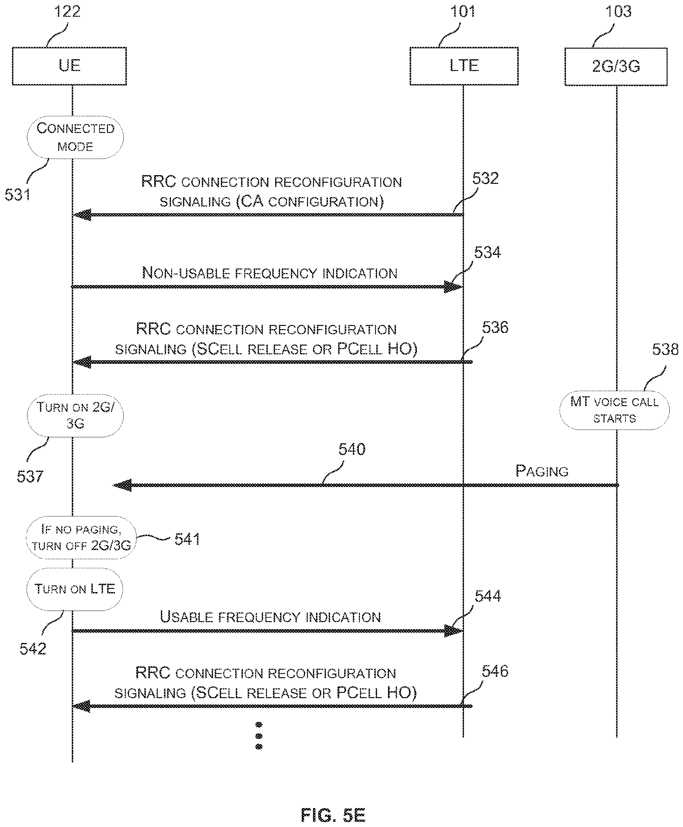

FIGs. 4B, 5D, and 5E correspond to the given UE 122 receiving a voice call (MT call) and attempting to connect the RF chain 302 included in the UE 122 to the 2G/3G BB 306 to operate on the 2G/3G network 103. Although not shown, initial RRC connection setup signaling occurred between the given UE 122 and its associated eNodeB (e.g., eNodeB 102 or 106) in order for the given UE 122 to be in connected mode 531 (see FIG. 5D).

Next at a block 422b of FIG. 4B, the given eNodeB transmits a RRC connection reconfiguration signaling comprising CA configuration to the given UE 122 (communication 532 at FIG. 5D). This RRC connection reconfiguration signaling is provided if there is no voice call on-going in 2G/3G. When the UE 122 anticipates receiving a 2G/3G paging, UE 122 sends a non-usable frequency indication to the given eNodeB (communication 534 in FIG. 5D). The non-usable frequency indication is received by the given eNodeB (block 424b). The non-usable frequency indication comprises identification of one or more frequency bands or frequency band combinations (each frequency band of each supported frequency bandwidth provided by CA) that cannot be used for LTE temporarily even those it is a supported frequency band or frequency band combination. Each of the supported frequency band or frequency band combination is the same as those concerning the UE capability signaling discussed above with respect to FIGs. 4A, 5A, and 5B. The identified one or more frequency bands or frequency band combinations cannot be simultaneously used with the current LTE serving cells due to RF sharing (e.g., will be used for a 2G/3G voice call) or other limitation of the dual-standby architecture.

The UE 122 may know that the 2G/3G paging occasion as already defined by the 2G/3G network 103 or a new 2G/3G paging occasion will be defined for this operation in the LTE network 101. If the paging occasion is already defined, the UE 122 also provides paging related parameters and information about the difference of system frame number between LTE and 2G/3G to the given eNodeB. In some embodiments, the non-usable frequency indication or additional signaling sent by the UE 122 with the non-usable frequency indication provides additional information such as, but not limited to, the following. Such information is correspondingly received by the eNodeB at the block 426a.
- The purpose of the non-usable frequency indication such as whether it is for paging, voice call, or measurement.
- If the non-usable frequency indication pertains to paging or measurement, also specifying the periodicity and duration of the non-usable frequency band/frequency band combination. With this information, the eNodeB can configure a measurement gap pattern to enable the UE 122 to receive a 2G/3G paging. The measurement gap pattern may comprise an existing measurement gap pattern or a new measurement gap pattern that is introduced to align with the 2G/3G paging cycle and duration. The measurement gap pattern may apply to a subset of the serving cells to be turned off to receive 2G/3G paging. Depending on the configuration of the measurement gap pattern, the UE 122 may not need to transmit a non-usable frequency indication each paging cycle to receive a 2G/3G paging.
- Measurement information is needed when the measurement gap pattern is not configured.

In response to receiving the non-usable frequency indication (and other possible information discussed immediately above), the given eNodeB determines and transmits RRC connection reconfiguration signaling instructing the UE 122 to release a particular SCell or to perform inter-frequency HO of PCell to another carrier frequency (block 426b) (communication 536). Additional details regarding SCell release or PCell HO is discussed above with respect to blocks 408a and b.

If 2G/3G operation is possible based on the RRC connection reconfiguration signaling, the UE 122 turns on 2G/3G 537 (e.g., camps on a 2G/3G cell) and attempts to receive 2G/3G paging. When a MT voice call starts 538, the 2G/3G network 103 (e.g., a BS, such as BS 110 or 114) sends a 2G/3G paging to the given UE 122 (communication 540 in FIG. 5D). In response, the UE 122 initiates voice service via 2G/3G while maintaining connection with the given eNodeB for packet switch (PS) service.

FIG. 5E illustrates the case where the 2G/3G paging (communication 540 in FIG. 5D) is either not sent or otherwise not properly received by the given UE 122. In this case the UE 122 turns off 2G/3G 541 and turns back on LTE 542 - in other words, switching the RF chain 302 from the 2G/3G BB 306 to LTE BB 304 (FIG. 3). Then the UE 122 sends a usable frequency indication to the given eNodeB (communication 544). The usable frequency indication is received by the eNodeB at a block 428b. The usable frequency indication comprises informing the eNodeB of the change to the previously sent non-usable frequency indication (that it is now usable again) or providing new usable frequency information, for such frequency band or frequency band combination to be available for use by the LTE serving cells. In response, at a block 430b and at communication 546, the eNodeB determines and transmits RRC connection reconfiguration signaling to the UE 122 comprising instructions to release a particular SCell or to perform inter-frequency HO of PCell to another carrier frequency. Additional details regarding SCell release or PCell HO is discussed above with respect to blocks 408a and b.

Alternatively, the eNodeB can inform the UE 122 that there is a 2G/3G paging pending. In response, the UE 122 returns a non-usable frequency indication to the eNodeB to temporarily reserve frequency band/frequency band combination for use on the 2G/3G network 103 for the 2G/3G voice call. In this case the UE 122 may not require 2G/3G paging from the 2G/3G network 103 (such as communication 540) in order to conduct the 2G/3G voice call.

In contrast to the RRC signaling approach discussed above, an alternative embodiment for informing the eNodeB whether the RF chain 302 of a given UE 122 is/will be used for 2G/3G service rather than LTE service is via enhancement of medium access control (MAC) signaling.

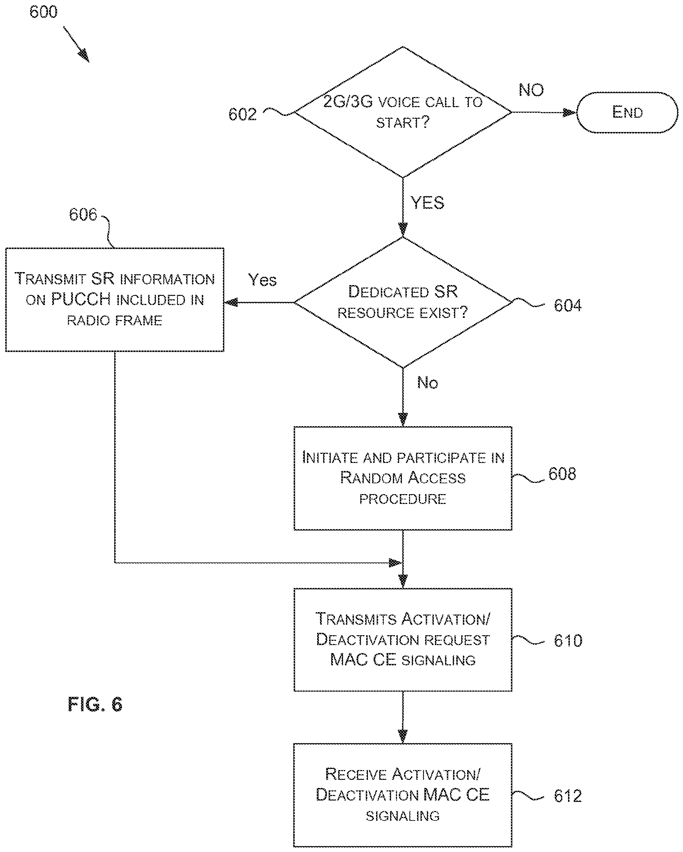

FIG. 6 illustrates an example flow diagram 600 for using Activation/Deactivation MAC control element (CE) signaling according to some embodiments. If a 2G/3G voice call (MO or MT call) is about to start on the given UE 122 (yes branch of block 602), then the existence of dedicated scheduling request (SR) resource for the given UE 122 is checked at a block 604. The UE 122 may or may not have uplink (UL) resources allocated for new transmission by the given eNodeB at the point of time of the start of the 2G/3G voice call. However, regardless of whether allocated UL resources exist, the eNodeB should be informed of the start of the 2G/3G voice call so that the frequency band/combination that will be used for that call is not used by the LTE serving cells associated with the UE 122 for the duration of the call.

If dedicated SR resource(s) are configured and exists (yes branch of block 604), then the UE 122 transmits SR information on the physical uplink control channel (PUCCH) included in at least one subframe of a radio frame to the eNodeB (block 606). If dedicated SR resource(s) are not allocated for the UE 122 (no branch of block 604), then the UE 122 initiates and participates in Random Access procedure to provide the requisite 2G/3G voice call information to the eNodeB (block 608).

In response to either the SR information or Random Access procedure, the eNodeB schedules uplink physical uplink shared channel (PUSCH) resource. The UE 122 transmits Activation/Deactivation request MAC CE signaling (block 610). In response to such request signaling, the eNodeB sends an Activation/Deactivation MAC CE signaling instructing the UE 122 to deactivate a particular SCell or PCell operating in the LTE frequency band that cannot co-exist with the 2G/3G frequency band to be used for the 2G/3G voice call. The Activation/Deactivation MAC CE signaling is received by the UE 122, at a block 612. Thus, the Activation/Deactivation request MAC CE signaling is sent by the UE 122 sooner than it otherwise would be - triggered by the SR information on the PUCCH or Random Access procedure - in order to prevent delay in start of the voice call on the 2G/3G network. The UE 122 can request the deactivation of the PCell in the Activation/Deactivation request MAC CE signaling.

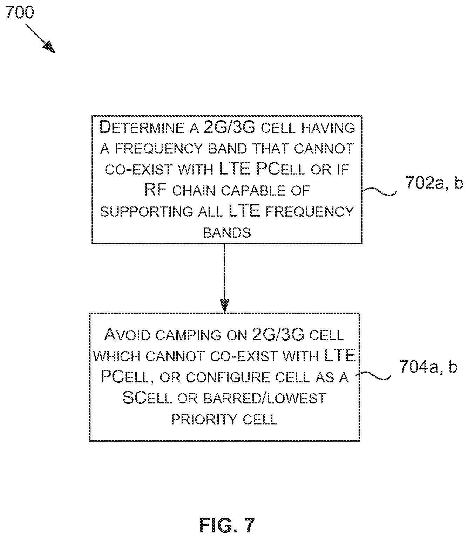

As another alternative embodiment, assignment of PCell and SCells and/or CCs for the PCell and SCells for the given UE 122 can be controlled by the network 100 to avoid frequency co-existence issues from occurring beforehand. As shown in an example flow diagram 700 of FIG. 7, for example, when CA is configured, the cell that is used for RRC connection setup is a PCell. It is likely that the cell that the UE 122 is camped on for LTE service is the PCell unless HO is triggered to change the PCell, and that the LTE frequency band that cannot co-exist during the 2G/3G voice service is that associated with the PCell. Therefore, the UE 122 can proactively consider or determine a 2G/3G cell having a frequency band that cannot co-exist with LTE PCell as a barred cell or the lowest priority cell (block 702a). With this approach, the UE 122 can avoid camping on such 2G/3G cell which cannot co-exist with the LTE PCell (block 704a).

As another example, because a PCell cannot be deactivated for a given UE 122, if the RF chain 302 is capable of supporting all LTE frequency bands (block 702b), the network 100 assigns a cell having the same frequency band/combination as would be used for 2G/3G service by the RF chain 302 as a SCell (rather than a PCell) (block 704b). Thus, that SCell may be deactivated when the RF chain 302 is switched to support 2G/3G service.

The term "machine-readable medium," "computer readable medium," and the like should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present disclosure. The term "machine-readable medium" shall accordingly be taken to include, but not be limited to, solid-state memories, optical and magnetic media, and carrier wave signals.

It will be appreciated that, for clarity purposes, the above description describes some embodiments with reference to different functional units or processors. However, it will be apparent that any suitable distribution of functionality between different functional units, processors or domains may be used without detracting from embodiments of the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Although the present invention has been described in connection with some embodiments, it is not intended to be limited to the specific form set forth herein. One skilled in the art would recognize that various features of the described embodiments may be combined in accordance with the invention. Moreover, it will be appreciated that various modifications and alterations may be made by those skilled in the art without departing from the scope of the invention.

The Abstract of the Disclosure is provided to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment.

## Claims

1. A method for using radio frequency, RF, chain sharing information, the method comprising:
receiving (402a,b), at an evolved node B, eNodeB, RF chain sharing information from user equipment, UE, associated with the eNodeB, wherein a RF chain is included in the UE and switchable between a first and a second network, the first and second networks sharing at least a frequency band, in the sense that the RF chain can be switched between the first and second networks which are close enough to enable switching of the RF chain between the two, and the RF chain sharing information comprising indication of a non-usable frequency band for the first network; and
transmitting (404a,b), by the eNodeB, radio resource control, RRC, connection reconfiguration signaling to the UE to release a secondary cell, SCell, or perform inter-frequency handover of a primary cell, PCell, in response to the RF chain sharing information, wherein the RF chain sharing information comprises the non-usable frequency band and further comprising: in response to an absence of a paging for a start of a call terminating at the UE, receiving indication of a usable frequency band, and transmitting a second RRC connection reconfiguration signaling to the UE in accordance with the indication of the usable frequency band.

2. The method of claim 1, wherein the RF chain sharing information comprises indication of which frequency band is supported for each of the first and second networks and a circuit switched, CS, service indicator upon starting a call originated by the UE.

3. The method of claim 1, further comprising receiving (406a,b), at the eNodeB, a paging request from the second network upon a start of a call terminating at the UE, wherein the transmitting step is performed in response to the paging request and the eNodeB is included in the first network.

4. The method of claim 1, wherein the RF chain sharing information comprises the non-usable frequency band and the RF chain sharing information is received by the eNodeB after starting a call originated by the UE.

5. The method of claim1, wherein the indication of the usable frequency band comprises reversal of the indication of the non-usable frequency band or pertains to a frequency band different from the frequency band corresponding to the indication of the non-usable frequency band.

6. The method of claim 1, wherein the first network comprises a 3rd Generation Partnership Project, 3GPP, long term evolution, LTE, network and the second network comprises a 2nd Generation, 2G, radio access technology, RAT, network that is a Global System for Mobile, GSM, or Code Division Multiple Access, CDMA, standard based network.

7. The method of claim 1, wherein the first network comprises a 3rd Generation Partnership Project, 3GPP, long term evolution, LTE, network and the second network comprises a 3rd Generation, 3G, radio access technology, RAT, network that is a Universal Mobile Telecommunications System, UMTS, or Evolved High Speed Packet Access, HSPA+, standard based network.

8. The method of claim 1, wherein the first network comprises a 3rd Generation Partnership Project, 3GPP, long term evolution, LTE, network operating in time division duplexing, TDD, mode or frequency division duplexing, FDD, mode.

9. The method of claim 1, wherein the RRC connection reconfiguration signaling comprises an instruction to release the SCell when a frequency band supported by the SCell is the same as a frequency band to be used by the second network when the RF chain is switched to the second network, wherein the SCell is included in the first network.

10. The method of claim 1, wherein the RRC connection reconfiguration signaling comprises an instruction to perform the inter-frequency handover of the PCell to another carrier frequency when there is no frequency band shared between the SCell and the second network to be used when the RF chain is switched to the second network, wherein the PCell is included in the first network.

## Patentansprüche

1. Verfahren zur Verwendung von Radiofrequenz, RF, Kettenteilungsinformationen, wobei das Verfahren umfasst:
Empfangen (402a,b) an einem entwickelten Knoten B, eNodeB, von RF-Kettenteilungsinformationen von Benutzergerät [User Equipment; UE], das dem eNodeB zugeordnet ist, wobei eine RF-Kette in dem UE enthalten und zwischen einem ersten und einem zweiten Netzwerk schaltbar ist, wobei das erste und zweite Netzwerk mindestens ein Frequenzband teilen, in dem Sinne, als dass die RF-Kette zwischen dem ersten und zweiten Netzwerk, die nahe genug sind, um ein Schalten der RF-Kette zwischen den beiden zu ermöglichen, geschaltet werden kann, und die RF-Kettenteilungsinformationen Angaben eines nicht-verwendbaren Frequenzbandes für das erste Netzwerkübertragen (404a,b), durch das eNodeB, Funkressourcensteuerung, [Radio Resource Control; RRC],
Verbindungsneukonfigurationssignalgebung an das UE zum Freigeben einer Sekundärzelle, SCell, oder das Durchführen einer Interfrequenzübergabe einer Primärzelle, PCell, in Reaktion auf das Teilen von Informationen durch die RF-Kette umfassen, wobei die RF-Kettenteilungsinformationen das nicht-verwendbare Frequenzband umfasst und ferner umfasst: in Reaktion auf das Nichtvorhandensein eines Paging für einen Start eines Anrufs, der an dem UE terminiert, Empfangen einer Angabe zu einem verwendbaren Frequenzband und Senden einer zweiten RRC-Verbindungsneukonfigurationssignalgebung an das UE gemäß der Angabe des verwendbaren Frequenzbandes.

2. Verfahren nach Anspruch 1, wobei das RF-Ketteninformationsteilen eine Angabe dazu umfasst, welches Frequenzband für jedes, das erste und zweite Netzwerk, umfasst und einen durchgeschaltenen [Circuit Switched; CS] Dienstindikator bei Starten eines Anrufs, der von dem UE ausgeht.

3. Verfahren nach Anspruch 1, ferner das Empfangen (406a,b), an dem eNodeB, einer Paginganforderung von dem zweiten Netzwerk bei Start eines Anrufs, der an dem UE terminiert, umfassend, wobei der Sendeschritt in Reaktion auf die Paginganforderung durchgeführt wird und der eNodeB in dem ersten Netzwerk enthalten ist.

4. Verfahren nach Anspruch 1, wobei das RF-Ketteninformationsteilen das nicht-verwendbare Frequenzband umfasst und das RF-Ketteninformationsteilen von dem eNodeB nach Start eines Anrufs, der von dem UE ausgeht, empfangen wird.

5. Verfahren nach Anspruch 1, wobei die Angabe des verwendbaren Frequenzbandes Umkehr der Angabe des nichtverwendbaren Frequenzbandes umfasst oder sich auf ein Frequenzband bezieht, das sich von dem Frequenzband entsprechend der Angabe des nichtverwendbaren Frequenzbandes unterscheidet.

6. Verfahren nach Anspruch 1, wobei das erste Netzwerk ein 3rd Generation Partnership Project, 3 GPP, Long-Term Evolution, LTE, Netzwerk umfasst und das zweite Netzwerk ein 2nd Generation, 2G, Radio Access Technology, RAT, Netzwerk, das ein Global System for Mobile, GSM, oder Code Division Multiple Access, CDMA, Standard basiertes Netzwerk umfasst.

7. Verfahren nach Anspruch 1, wobei das erste Netzwerk ein 3rd Generation Partnership Project, 3GPP, Long-Term Evolution, LTE, Netzwerk umfasst und das zweite Netzwerk ein 3rd Generation, 3G, Radio Access Technology, RAT, Netzwerk, das ein Universal Mobile Telecommunications System, UMTS, oder Evolved High Speed Packet Access, HSPA+, Standard basiertes Netzwerk umfasst.

8. Verfahren nach Anspruch 1, wobei das erste Netzwerk ein 3rd Generation Partnership Project, 3GPP, Long Term Evolution, LTE, Netzwerk das mit Zeitduplexing [Time Division Duplexing; TDD] Modus oder Frequenzduplexing [Frequency Division Duplexing; FDD] Modus arbeitet, umfasst.

9. Verfahren nach Anspruch 1, wobei die RRC-Verbindungsneukonfigurierungsignalgebung eine Anweisung zum Freigeben der SCell umfasst, wenn ein von der SCell unterstütztes Frequenzband das gleiche ist, wie ein Frequenzband, das von dem zweiten Netzwerk zu verwenden ist, wenn die RF-Kette zu dem zweiten Netzwerk geschaltet wird, wobei die SCell in dem ersten Netzwerk enthalten ist.

10. Verfahren nach Anspruch 1, wobei die RRC-Verbindungsneukonfigurationssignalgebung eine Anweisung zum Durchführen der Interfrequenzübergabe der PCell an eine andere Trägerfrequenz umfasst, wenn es kein Frequenzband gibt, das von der SCell und dem zweiten Netzwerk geteilt wird, das zu verwenden ist, wenn die RF-Kette zu dem zweiten Netzwerk geschaltet wird, wobei die PCell in dem ersten Netzwerk enthalten ist.

## Revendications

1. Procédé pour utiliser des informations de partage de chaîne radiofréquence, RF, le procédé comprenant :
la réception (402a,b), à un noeud B évolué, eNodeB, d'informations de partage de chaîne RF à partir d'un équipement utilisateur, UE, associé à l'eNodeB, dans lequel une chaîne RF est incluse dans l'UE et commutable entre des premier et second réseaux, les premier et second réseaux partageant au moins une bande de fréquence, en ce sens que la chaîne RF peut être commutée entre les premier et second réseaux qui sont suffisamment proches pour permettre la commutation de la chaîne RF entre les deux, et les informations de partage de chaîne RF comprenant une indication d'une bande de fréquence non utilisable pour le premier réseau ; et
la transmission (404a,b), par l'eNodeB, de signalisation de reconfiguration de connexion à contrôle de ressources radio, RRC, à l'UE pour libérer une cellule secondaire, SCell, ou effectuer un transfert inter-fréquence d'une cellule primaire, PCell, en réponse aux informations de partage de chaîne RF, dans lequel les informations de partage de chaîne RF comprennent la bande de fréquence non utilisable et comprenant en outre : en réponse à une absence d'une radiomessagerie pour un commencement d'un appel se terminant à l'UE, la réception d'indication d'une bande de fréquence utilisable, et la transmission d'une seconde signalisation de reconfiguration de connexion à RRC à l'UE conformément à l'indication de la bande de fréquence utilisable.

2. Procédé selon la revendication 1, dans lequel les informations de partage de chaîne RF comprennent une indication de la bande de fréquence qui est supportée pour chacun des premier et second réseaux et un indicateur de service de circuit commuté, CS, lors du commencement d'un appel provenant de l'UE.

3. Procédé selon la revendication 1, comprenant en outre la réception (406a,b), à l'eNodeB, d'une demande de radiomessagerie à partir du second réseau lors d'un commencement d'un appel se terminant à l'UE, dans lequel l'étape de la transmission est effectuée en réponse à la demande de radiomessagerie et l'eNodeB est inclus dans le premier réseau.

4. Procédé selon la revendication 1, dans lequel les informations de partage de chaîne RF comprennent la bande de fréquence non utilisable et les informations de partage de chaîne RF sont reçues par l'eNodeB après le commencement d'un appel provenant de l'UE.

5. Procédé selon la revendication 1, dans lequel l'indication de la bande de fréquence utilisable comprend l'inversion de l'indication de la bande de fréquence non utilisable ou concerne une bande de fréquence différente de la bande de fréquence correspondant à l'indication de la bande de fréquence non utilisable.

6. Procédé selon la revendication 1, dans lequel le premier réseau comprend un réseau à évolution à long terme, LTE, du projet de partenariat de 3^{ième} génération, 3GPP, et le second réseau comprend un réseau de technologie d'accès radio, RAT, de 2^{ième} génération, 2G, qui est un réseau à base de norme système mondial pour les mobiles, GSM, ou accès multiple par répartition en code, CDMA.

7. Procédé selon la revendication 1, dans lequel le premier réseau comprend un réseau à évolution à long terme, LTE, du projet de partenariat de 3^{ième} génération, 3GPP, et le second réseau comprend un réseau de technologie d'accès radio, RAT, de 3^{ième} génération, 3G, qui est un réseau à base de norme système universel de télécommunication avec les mobiles, UMTS, ou accès par paquets haut débit évolué, HSPA+.

8. Procédé selon la revendication 1, dans lequel le premier réseau comprend un réseau à évolution à long terme, LTE, du projet de partenariat de 3^{ieme} génération, 3GPP, fonctionnant en mode de duplexage par répartition dans le temps, TDD, ou en mode de duplexage par répartition en fréquence, FDD.

9. Procédé selon la revendication 1, dans lequel la signalisation de reconfiguration de connexion à RRC comprend une instruction pour libérer la SCell lorsqu'une bande de fréquence supportée par la SCell est la même qu'une bande de fréquence destinée à être utilisée par le second réseau lorsque la chaîne RF est commutée au second réseau, dans lequel la SCell est incluse dans le premier réseau.

10. Procédé selon la revendication 1, dans lequel la signalisation de reconfiguration de connexion à RRC comprend une instruction pour effectuer le transfert inter-fréquence de la PCell à une autre fréquence porteuse lorsqu'il n'y a aucune bande de fréquence, partagée entre la SCell et le second réseau, destinée à être utilisée lorsque la chaîne RF est commutée au second réseau, dans lequel la PCell est incluse dans le premier réseau.
